(19) **Europäisches Patentamt**
**European Patent Office**
**Office européen des brevets**

(11) **EP 3 453 789 B1**

(12) **EUROPEAN PATENT SPECIFICATION**

(45) Date of publication and mention
of the grant of the patent:
**28.10.2020 Bulletin 2020/44**

(51) Int Cl.:
*D01F 1/10* (2006.01)    *D01F 6/60* (2006.01)
*D01F 6/80* (2006.01)    *C08G 69/06* (2006.01)
*C08G 69/16* (2006.01)

(21) Application number: **18193519.8**

(22) Date of filing: **10.09.2018**

(54) **DEODORIZING NYLON 6 FIBER AND PREPARATION METHOD THEREOF**

DESODORIERENDE NYLON 6-FASER UND HERSTELLUNGSVERFAHREN DAFÜR

FIBRE DE NYLON 6 DÉSODORISANTE ET SON PROCÉDÉ DE PREPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2017 TW 106131051**

(43) Date of publication of application:
**13.03.2019 Bulletin 2019/11**

(73) Proprietor: **Chain Yarn Co., Ltd.**
**407 Taichung City (TW)**

(72) Inventors:
• **LIAO, Chun-Hung**
**633 Tuku Township, Yunlin Country (TW)**
• **CHEN, Yen-Hsiao**
**640 Douliu City, Yunlin Country (TW)**
• **LIN, Chuan-Shing**
**640 Douliu City, Yunlin Country (TW)**
• **HUANG, Kuan-Jung**
**833 Kaohsiung City (TW)**

(74) Representative: **M. Zardi & Co S.A.**
**Via G. B. Pioda, 6**
**6900 Lugano (CH)**

(56) References cited:
**WO-A1-97/11991          CN-A- 103 774 271
CN-A- 104 593 897      JP-A- 2012 214 919**

**Description**

**BACKGROUND**

Technical Field

The present disclosure relates to a nylon 6 fiber and a preparation method thereof. More particularly, the present disclosure relates to a nylon 6 fiber having a deodorizing function and a preparation method thereof.

Description of Related Art

Textiles made from processes of the textile industry are porous materials which can absorb sweat, sebum and other wastes discharged thereof when worn by a user (such as the disclosure in Publication Number CN 103774271 A and JP 2012214919 A), and the aforementioned wastes will be further decomposed and utilized by bacteria, fungus and other microorganisms hosted on the surface of the human body. However, during the process of microbial decomposition and utilization of the wastes, lots of byproducts will be produced and accompanied with unpleasant odors. It has not only health concerns but also a possibility to affect the interpersonal relationships due to the unpleasant odors. Therefore, because the health awareness and the living standard are both improved in the modern society, demands for woven materials with antibacterial and deodorizing properties are rapidly increasing.

Currently, antibacterial and deodorizing fibers are obtained mainly by modifying the chemical or physical properties of fibers, or the antibacterial agents will be coated on the fibers so as to suppress the growth of microorganisms (such as the disclosure in Publication Number CN 104593897 A), so that the demands for preventing the generation of the unpleasant odors can be satisfied. In the aforementioned manufacturing methods, mixing the antibacterial agents with a mother liquor of the fiber and then for spinning is the most widely used and relatively simple method.

In the selection of antibacterial agents, the silver-based antibacterial agents are commonly used in the conventional antibacterial and deodorizing fibers, wherein the antibacterial agents with nano-silver particles are the most popular. The nano-silver particles have high stability and can be added into the mother liquor of the fiber and then made into antibacterial fibers by spinning or other manufacturing methods. However, because the surface activity of the nano-silver particles is high, the nano-silver particles is easy to aggregate in the fiber material and then form a polymer in the textile process due to the high temperature, so that an additional dispersing agent is need to add into the fiber mother liquor so as to enhance the dispersal activity of the nano-silver particles. Thus, it is not only increasing the manufacturing cost of the antibacterial textiles, but also increasing the difficulties of the process thereof.

In order to solve the aforementioned problems, there is an antibacterial and deodorizing fiber uses a non-silver antibacterial agent as an antibacterial and deodorizing additive, for example, mixing a p-tolyl-diiodomethylhydrazine having a bactericidal function with a plastic masterbatch so as to form an antibacterial fiber, or using titanium dioxide, tourmaline powder and bamboo charcoal as additives for antibacterial and deodorizing functions. However, in the present market, deodorizing demands of the textiles with deodorizing functions are always achieved by their antibacterial ability. Because the variety of microorganisms and odors, different antibacterial agents on different microorganisms are also with different antibacterial effects. Furthermore, although the growth of bacteria can be inhibited by the textile with antibacterial ability, it can only achieve the odor prevention effect without the odor removal effect.

Therefore, how to develop an antibacterial fiber with deodorizing functions so as to improve the application efficiency and the scope of use thereof has become the major goal of related industry.

**SUMMARY**

According to one aspect of the present disclosure, a preparation method of a deodorizing nylon 6 fiber including providing a fabricating step of deodorizing nylon 6 chips and performing a spinning step. The fabricating step includes the following steps. A mixing step is performed, wherein a porous powder of citrate is mixed with a caprolactam powder so as to obtain a raw material of a deodorizing chip, wherein a weight ratio of the porous powder of citrate ranges from 2 % to 6 % based on a weight ratio of the raw material of the deodorizing chip as 100 %, and a weight ratio of the caprolactam powder ranges from 94 % to 98 % based on the weight ratio of the raw material of the deodorizing chip as 100 %. A nano-grinding step is performed, wherein the raw material of the deodorizing chip is ground so as to obtain a size mixture of a deodorizing nylon 6, and an average diameter of the size mixture of the deodorizing nylon 6 ranges from 100 nm to 200 nm. A granulated polymerizing step is performed, wherein the size mixture of the deodorizing nylon 6 is polymerized so as to obtain the deodorizing nylon 6 chips. A viscosity adjusting step is performed, wherein a relative viscosity of the deodorizing nylon 6 chips is adjusted to a range from 2.20 mPa·s to 2.30 mPa·s. A water content adjusting step is performed, wherein a water content ratio of the deodorizing nylon 6 chips is adjusted to a range from 350 ppm to 550 ppm. The spinning step includes the following steps. A spinning material is provided, wherein the spinning material includes the deodorizing nylon 6 chips performed the viscosity adjusting step and the water content adjusting step. A melt fluxing step is performed, wherein the spinning material is spun under a temperature ranging from 255 °C to 265 °C so as to obtain the deodorizing nylon 6 fiber.

According to the preparation method of the foregoing aspect, wherein the weight ratio of the porous powder of citrate is 5 % based on the weight ratio of the raw material of the deodorizing chip as 100 %, and the weight ratio of the caprolactam powder is 95 % based on the weight ratio of the raw material of the deodorizing chip as 100 %.

According to the preparation method of the foregoing aspect, wherein the spinning material further includes a powder of titanium dioxide, and a weight ratio of the powder of titanium dioxide is greater than 0 and less than or equal to 7.5 based on the weight ratio of the deodorizing nylon 6 chips as 100 %.

According to the preparation method of the foregoing aspect, wherein the spinning material is melted in the melt fluxing step so as to obtain a spinning liquid, and the spinning step further includes the following step. A fiber extracting step is performed, wherein the fiber extracting step is for extracting the spinning liquid so as to obtain a nascent fiber of the deodorizing nylon 6, a difference between a relative viscosity of the nascent fiber of the deodorizing nylon 6 and the relative viscosity of the deodorizing nylon 6 chips performed the viscosity adjusting step is $\Delta RV$, and the following condition is satisfied: $0 < \Delta RV < 0.1$.

According to the preparation method of the foregoing aspect, wherein the spinning step further includes the following step. A cooling step is performed, wherein the cooling step is performed under a temperature ranging from 18 °C to 22 °C and then the nascent fiber of the deodorizing nylon 6 is solidified so as to form a solidified fiber of the deodorizing nylon 6.

According to the preparation method of the foregoing aspect, wherein the spinning step further includes the following step. A drawing step is performed, wherein the solidified fiber of the deodorizing nylon 6 is drawn with a draw ratio ranging from 1.2 % to 1.5 %.

According to the preparation method of the foregoing aspect, wherein the drawing step further includes the following step. A heating step is performed, wherein the solidified fiber of the deodorizing nylon 6 is heat set under a temperature ranging from 145 °C to 200 °C.

According to the preparation method of the foregoing aspect, wherein the spinning step further includes the following step. A winding step is performed, wherein the solidified fiber of the deodorizing nylon 6 performed the heating step is wound in a speed ranging from 3200 m/min to 4800 m/min, and a physical property of the solidified fiber of the deodorizing nylon 6 is changed by the drawing step and the winding step, so that the solidified fiber of the deodorizing nylon 6 is transformed into the deodorizing nylon 6 fiber.

According to the preparation method of the foregoing aspect, wherein the physical property of the solidified fiber of the deodorizing nylon 6 changed is a strength or an elongation.

According to another aspect of the present disclosure, a deodorizing nylon 6 fiber is made by the preparation method according to the aforementioned aspect, wherein a denier per filament of the deodorizing nylon 6 fiber ranges from 0.5 dpf to 6 dpf, and a strength of the deodorizing nylon 6 fiber ranges from 3.0 g/d to 6.8 g/d.

According to the deodorizing nylon 6 fiber of the foregoing aspect, wherein an extensibility of the deodorizing nylon 6 fiber ranges from 40 % to 50 %.

**BRIEF DESCRIPTION OF THE DRAWINGS**

The present disclosure can be more fully understood by reading the following detailed description of the embodiment, with reference made to the accompanying drawings as follows:

Fig. 1 is a flow chart of a preparation method of a deodorizing nylon 6 fiber according to one embodiment of the present disclosure.

Fig. 2 is a flow chart of Step 300 of another embodiment of the present disclosure.

Fig. 3 is a schematic view of a spinning apparatus used in Step 300 of Fig. 2.

**DETAILED DESCRIPTION**

**<Preparation Method of Deodorizing Nylon 6 Fiber>**

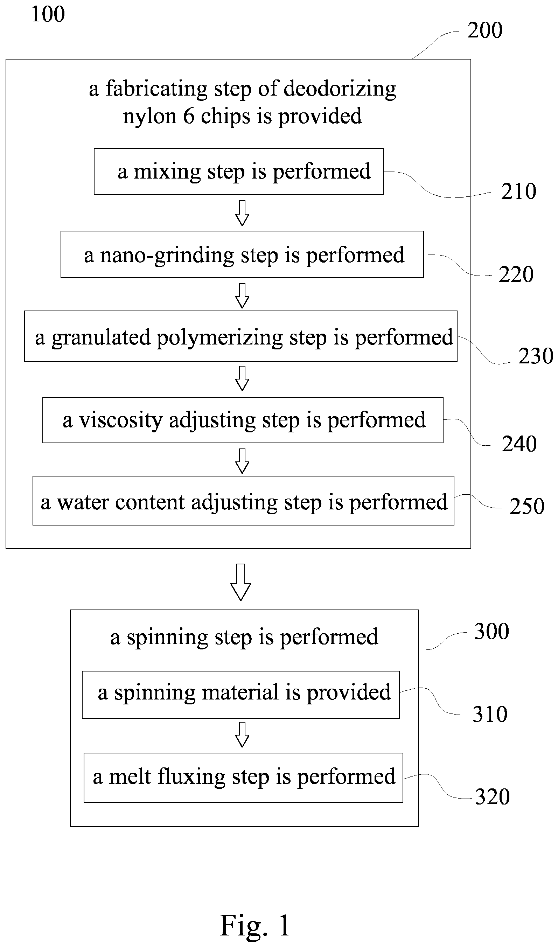

Please refer to Fig. 1, which is a flow chart of a preparation method 100 of a deodorizing nylon 6 fiber according to one embodiment of the present disclosure. The preparation method 100 of the deodorizing nylon 6 fiber includes Step 200 and Step 300.

In Step 200, a fabricating step of deodorizing nylon 6 chips is provided, and Step 200 includes Step 210, Step 220, Step 230, Step 240 and Step 250.

In Step 210, a mixing step is performed, wherein a porous powder of citrate is mixed with a caprolactam powder so as to obtain a raw material of a deodorizing chip. A weight ratio of the porous powder of citrate ranges from 2 % to 6 % based on a weight ratio of the raw material of the deodorizing chip as 100 %, and a weight ratio of the caprolactam powder ranges from 94 % to 98 % based on the weight ratio of the raw material of the deodorizing chip as 100 %. More preferably, the weight ratio of the porous powder of citrate is 5 % based on the weight ratio of the raw material of the deodorizing chip as 100 %, the weight ratio of the caprolactam powder is 95 % based on the weight ratio of the raw material of the deodorizing chip as 100 %, and the aforementioned caprolactam powder can be a commercially available product.

In Step 220, a nano-grinding step is performed, wherein the raw material of the deodorizing chip is ground so as to obtain a size mixture of a deodorizing nylon 6, and an average diameter of the size mixture of the deodorizing nylon 6 ranges from 100 nm to 200 nm. The porous powder of citrate and the caprolactam powder can be refined into the size mixture in nanometer level in the nano-grinding step so as to improve the dispersibility of the porous powder of citrate in the caprolactam powder, so that the deodorizing ability of the deodorizing nylon 6 fiber can be further enhanced. Furthermore, the pressure increasing condition of the size mixture can be effectively stabilized when the average diameter of the size mixture of the deodorizing nylon 6 ranges from 100 nm to 200 nm.

In Step 230, a granulated polymerizing step is performed, wherein the size mixture of the deodorizing nylon 6 is polymerized so as to obtain the deodorizing nylon 6 chips, and the aforementioned deodorizing nylon 6 chips can be further physically modified so as to use in the following spinning processes.

In Step 240, a viscosity adjusting step is performed, wherein a relative viscosity of the deodorizing nylon 6 chips is adjusted to a range from 2.20 mPa·s to 2.30 mPa·s. When the relative viscosity of the deodorizing nylon 6 chips is greater than 3.0 mPa·s, the flow rate of the spinning liquid is slow thereby. As a result, the residence time of the spinning liquid in the manifold is prolonged, so that it is unfavorable for spinning. When the relative viscosity of the deodorizing nylon 6 chips is less than 2.2 mPa·s, the strength of the deodorizing nylon 6 fiber made by the spinning liquid is low. Therefore, a relatively stable spinning effect can be obtained when the relative viscosity of the deodorizing nylon 6 chips is between 2.20 mPa·s to 2.30 mPa·s.

In Step 250, a water content adjusting step is performed, wherein a water content ratio of the deodorizing nylon 6 chips is adjusted to a range from 350 ppm to 550 ppm. Therefore, a proper water content ratio of the deodorizing nylon 6 chips can be obtained by adjusting the water content thereof, so that better physical spinning properties can be obtained, and the probability of breaking or degrading of the deodorizing nylon 6 fiber can be reduced.

In Step 300, a spinning step is performed, and Step 300 includes Step 310 and Step 320.

In Step 310, a spinning material is provided, wherein the spinning material includes the deodorizing nylon 6 chips performed the viscosity adjusting step (that is, Step 240) and the water content adjusting step (that is, Step 250). Furthermore, the spinning material can further include a powder of titanium dioxide, and a weight ratio of the powder of titanium dioxide is greater than 0 and less than or equal to 7.5 based on the weight ratio of the deodorizing nylon 6 chips as 100 %. The aforementioned powder of titanium dioxide is a conventional matting agent, thus a specification the deodorizing nylon 6 fiber made by the deodorizing nylon 6 chips according to the present disclosure can be semi-dull or full-dull by adding titanium dioxide into the spinning material. Therefore, the applications of the deodorizing nylon 6 fiber of the present disclosure can be further expanded.

In Step 320, a melt fluxing step is performed, wherein the spinning material is spun under a temperature ranging from 255 °C to 265 °C so as to obtain a deodorizing nylon 6 fiber.

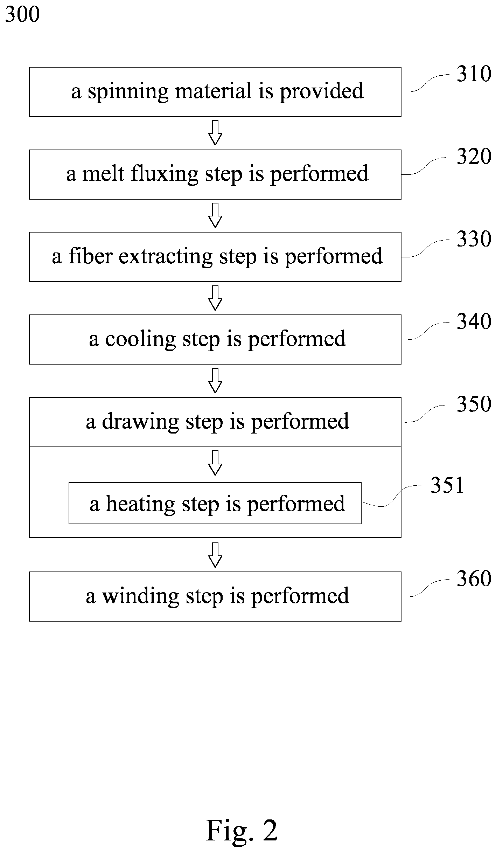

Please refer to Fig. 2, which is a flow chart of Step 300 of another embodiment of the present disclosure. In addition to Step 310 and Step 320, Step 300 further includes Step 330, Step 340, Step 350 and Step 360.

In Step 330, a fiber extracting step is performed. In detail, the spinning material is melted in Step 320 so as to obtain a spinning liquid, and the fiber extracting step is for extracting the spinning liquid so as to obtain a nascent fiber of the deodorizing nylon 6. A difference between a relative viscosity of the nascent fiber of the deodorizing nylon 6 and the relative viscosity of the deodorizing nylon 6 chips performed Step 240 is $\Delta$RV, wherein the relative viscosity of the nascent fiber of the deodorizing nylon 6 is RV1, the relative viscosity of the deodorizing nylon 6 chips performed Step 240 is RV2, and $\Delta$RV is the difference between RV1 and RV2 (That is, $\Delta$RV = RV1 - RV2.), and the following condition can be satisfied: $0 < \Delta RV < 0.1$. Therefore, it is favorable to spin at a high speed, and the spinning condition of the deodorizing nylon 6 fiber is the best.

In Step 340, a cooling step is performed, wherein the cooling step can be performed under a temperature ranging from 18 °C to 22 °C and then the nascent fiber of the deodorizing nylon 6 is solidified so as to form a solidified fiber of the deodorizing nylon 6. When the temperature is less than 18 °C, the cooling rate of the nascent fiber of the deodorizing nylon 6 is too fast, thus the arrangement of caprolactam monomers will be affected, so that the strength of the deodorizing nylon 6 fiber is not good as expected. When the temperature is greater than 22 °C, the cooling of the nascent fiber of the deodorizing nylon 6 is insufficient, thus the solidified fiber of the deodorizing nylon 6 is not easy to be drawn in the following spinning processes, and the spinning efficiency will be greatly reduced.

In Step 350, a drawing step is performed, wherein the solidified fiber of the deodorizing nylon 6 is drawn with a draw ratio ranging from 1.2 % to 1.5 %. The draw ratio is a ratio of an output speed to an input speed of the drawing step. When the draw ratio is less than 1.2%, the probability of the fiber break is increased, and when the draw ratio is greater than 1.5%, the solidified fiber of the deodorizing nylon 6 is easy to be drawn excessively and tends to break. Furthermore, Step 350 can further include Step 351. In Step 351, a heating step is performed, wherein the solidified fiber of the deodorizing nylon 6 is heat set under a temperature ranging from 145 °C to 200 °C. When the temperature is excessively high, the solidified fiber of the deodorizing nylon 6 will shake vigorously on the godet roller assembly. Accordingly, the tension is too small, and it is unfavorable for spinning. When the temperature is excessively low, the solidified fiber of the deodorizing nylon 6 is heat set insufficiently. Accordingly, the stress in the molecular chain is increased, and it is unfavorable to form a spinning cake.

In Step 360, a winding step is performed, wherein the solidified fiber of the deodorizing nylon 6 performed the heating step is wound in a speed ranging from 3200 m/min to 4800 m/min, and a physical property of the solidified fiber of the deodorizing nylon 6, such as a strength or an elongation is changed by the drawing step (that is, Step 350) and the winding step (that is, Step 360), so that the solidified fiber of the deodorizing nylon 6 is transformed into the deodorizing nylon 6 fiber which is suitable for the following spinning processes.

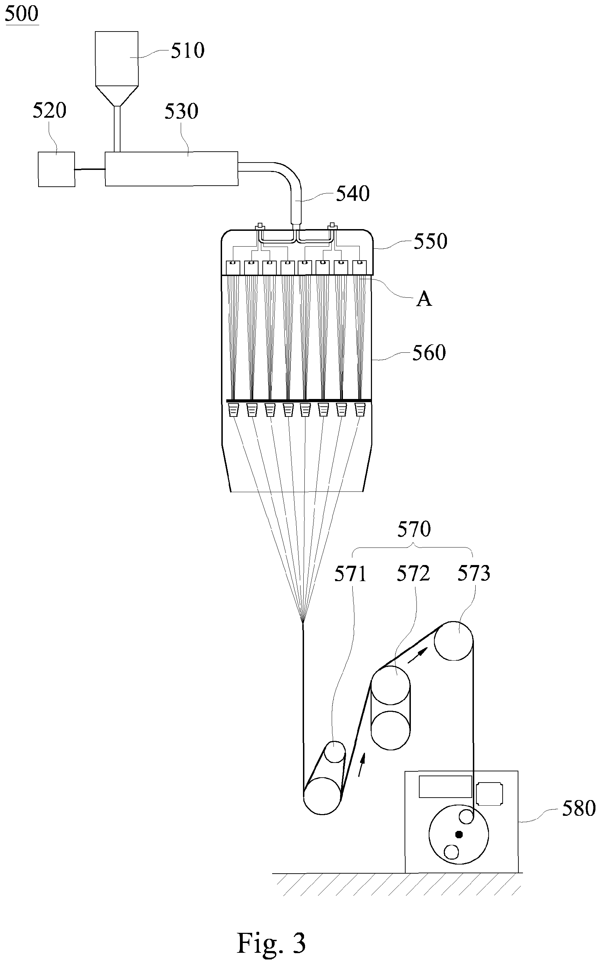

Please refer to Fig. 3, which is a schematic view of a spinning apparatus 500 used in Step 300 in Fig. 2. As shown in Fig. 3, the spinning apparatus 500 includes a feeding tank 510, a servo motor 520, an extruder 530, a manifold 540, a spinning beam 550, a cooling device 560, a draw device 570 and a winding device 580.

In Step 310, the deodorizing nylon 6 chips performed the viscosity adjusting step (that is, Step 240) and the water content adjusting step (that is, Step 250) and a powder of titanium dioxide are added into the feeding tank 510 and then transmitted into the extruder 530.

In Step 320, the deodorizing nylon 6 chips and the powder of titanium dioxide are melted and fluxed in the extruder 530 under a temperature ranging from 255 °C to 265 °C so as to form a spinning liquid. Next, the spinning liquid is pressed out of the extruder 530 by the servo motor 520 so that the spinning liquid will enter the manifold 540, wherein a temperature of the manifold 540 ranges from 260 °C to 270 °C so as to prevent the spinning liquid from cooling down and solidifying in the manifold 540 before the spinning liquid enters the spinning beam 550.

In Step 330, the spinning liquid in the spinning beam 550 is distributed by a metering pump (not shown) to each spinneret (not shown) via tubes so as to form the nascent fiber A of the deodorizing nylon 6, wherein a temperature of the spinning beam 550 is controlled in a range from 260 °C to 270 °C. Furthermore, there is a windless zone (not shown) between the spinning beam 550 and the cooling device 560, and the nascent fiber A of the deodorizing nylon 6 can be cooled down slowly in the windless zone so as to prevent the crystallization of fibers from affecting by external forces such as air flow, so that the strength of the nascent fiber A of the deodorizing nylon 6 can be further enhanced.

In Step 340, the nascent fiber A of the deodorizing nylon 6 is cooled by the cooling device 560, wherein a cooling gas is provided by the cooling device 560, and a temperature of the cooling gas ranges from 18 °C to 22 °C so as to cool and solidify the nascent fiber A of the deodorizing nylon 6 and then form the solidified fiber of the deodorizing nylon 6. Furthermore, the nascent fiber A of the deodorizing nylon 6 are bundled and oiled via an oiling nozzle (not shown) or an oiling roll (not shown) so that the nascent fiber A of the deodorizing nylon 6 can be bundled and lubricated.

In Step 350, the solidified fiber of the deodorizing nylon 6 is drawn and performed Step 351 by the draw device 570 so as to heat set the solidified fiber of the deodorizing nylon 6. As shown in Fig. 3, the draw device 570 includes a first godet roller assembly 571, a second godet roller assembly 572 and a third godet roller assembly 573, wherein at least one of the first godet roller assembly 571, the second godet roller assembly 572 and the third godet roller assembly 573 has a heating function, so that the solidified fiber of the deodorizing nylon 6 can be heat set, and the solidified fiber of the deodorizing nylon 6 can be extended in multiple stages so as to change the physical properties such as a strength or an elongation.

In Step 360, the solidified fiber of the deodorizing nylon 6 performed Step 350 can be wound on a paper tube in a speed ranging from 3200 m/min to 4800 m/min by the winding device 580 so as to form a spinning cake. After performing Step 350 and Step 360, the physical property of the solidified fiber of the deodorizing nylon 6 has been changed, and the solidified fiber of the deodorizing nylon 6 is transformed into the deodorizing nylon 6 fiber which is suitable for the following spinning processes.

### <Deodorizing Nylon 6 Fiber >

The deodorizing nylon 6 fiber of the present disclosure is made by the preparation method 100 of the deodorizing nylon 6 fiber, wherein a denier per filament of the deodorizing nylon 6 fiber ranges from 0.5 dpf to 6 dpf, a strength of the deodorizing nylon 6 fiber ranges from 3.0 g/d to 6.8 g/d, and an extensibility of the deodorizing nylon 6 fiber ranges from 40 % to 50 %. The deodorizing nylon 6 fiber of the present disclosure has an excellent deodorizing ability and can be widely used in related fields.

**<Examples and Comparative Examples >**

**1. Dispersibility Test of Size Mixture of Deodorizing Nylon 6**

In the present experiment, the size distribution and the pressure increasing condition of the porous powder of citrate and the caprolactam powder of the size mixture of the deodorizing nylon 6 performed the nano-grinding step are analyzed so as to evaluate the dispersibility of the nanoparticles.

In the test of the size distribution, the average particle size and the particle size distribution of the size mixture of the deodorizing nylon 6 are analyzed by a laser particle size analyzer. In the pressure increasing test, the deodorizing nylon 6 chips are melted, and then the melt of the deodorizing nylon 6 chips is injected into a single screw screen press equipped with a 25 µ filter so as to observe the pressure change thereof.

The detailed data of the average particle size and the dispersibility of the porous powder of citrate mixed with different percentage of the caprolactam powder and then performed nano-ground are shown in Table 1. In Example 1 (Em 1), a weight ratio of the porous powder of citrate is 3 % and a weight ratio of the caprolactam powder is 97 % based on a weight ratio of the raw material of the deodorizing chip as 100 %. In Example 2, a weight ratio of the porous powder of citrate is 5 % and a weight ratio of the caprolactam powder is 95 % based on a weight ratio of the raw material of the deodorizing chip as 100 %. Furthermore, the present experiment further includes comparative examples. In Comparative Example 1 (CEm 1), a weight ratio of the porous powder of citrate is 7 % and a weight ratio of the caprolactam powder is 93 %, and in Comparative Example 2 (CEm 2), a weight ratio of the porous powder of citrate is 9 % and a weight ratio of the caprolactam powder is 91 %. Moreover, in the aforementioned Examples 1-2 and Comparative Examples 1-2, the size mixtures of the deodorizing nylon 6 of Example 1, and Example 2 are performed the nano-grinding step, respectively, and the size mixture of Comparative Example 1 and Comparative Example 2 are not performed the nano-grinding step so as to evaluate the effects of the nano-grinding step to the average particle size and the dispersibility of the size mixture of the deodorizing nylon 6. Moreover, the size mixtures of the deodorizing nylon 6 of Example 1, Example 2, Comparative Example 1 and Comparative Example 2 are stood for five minutes so as to observe whether the precipitation occurs or not.

| Table 1 | | | | | |
|---|---|---|---|---|---|
|  | Porous powder of citrate (%) | Caprolactam powder (%) | Average particle size (nm) | Dispersibility | Precipitation |
| Em 1 | 3 | 97 | 199 | Good | N |
| Em 2 | 5 | 95 | 187 | Excellent | N |
| CEm 1 | 7 | 93 | 3635 | Worse | Y |
| CEm 2 | 9 | 91 | 5338 | Worst | Y |

As shown in Table 1, after performing the nano-grinding step, both of the average particle sizes of Example 1 and Example 2 are falling in a range from 100 nm to 200 nm, and the average particle sizes of Comparative Example 1 and Comparative Example 2 are 3635 nm and 5338 nm, respectively, wherein the Comparative Example 2 is without performing the nano-grinding step. It shows that the porous powder of citrate and the caprolactam powder can be ground effectively by the nano-grinding step, and the average particle size of the size mixture of the deodorizing nylon 6 thereof can fall between 100 nm to 200 nm so as to enhance the dispersibility of the porous powder of citrate and the caprolactam powder.

In the aspect of dispersibility, the dispersibility of the size mixture of the deodorizing nylon 6 of Example 2 is best, the dispersibility of Example 1 is also good, and there is no precipitation of the size mixtures of the deodorizing nylon 6 of Example 1 and Example 2 after being stood for five minutes. However, both of the dispersibility of size mixtures of the deodorizing nylon 6 of Comparative Example 1 and Comparative Example 2 are worse than Example 1 and Example 2, and a precipitation can be seen by eyes in Comparative Example 1 and Comparative Example 2 after being stood for five minutes. Thus, the porous powder of citrate having a deodorizing function can be mixed with the caprolactam powder uniformly according to the mixing ratio of the present disclosure and provide a preferred dispersibility so as to facilitate the preparation of the deodorizing nylon 6 fiber.

**2. Property Analysis of Deodorizing Nylon 6 Chips**

The present experiment is for measuring the viscosity, the water content, the concentration of amino groups and the ash content of the deodorizing nylon 6 chips so as to analyze the physical properties of the deodorizing nylon 6 chips of the present disclosure.

In the analysis of the relative viscosity, 0.25 g of the deodorizing nylon 6 chips is dissolved in 98 wt% sulfuric acid, wherein the ratio of the sample of the deodorizing nylon 6 chips to the sulfuric acid is 1 g : 100 ml. The flowing time (T1) of the sulfuric acid with the dissolving sample is measured via an Ostwald viscosimeter at 25 °C. The flowing time (T2) of the sulfuric acid without the sample is measured via the Ostwald viscosimeter at 25 °C. The relative viscosity in sulfuric acid is the ratio of T1 and T2, i.e., the relative viscosity in sulfuric acid equals to T1/T2.

In the analysis of the water content, the water content of the deodorizing nylon 6 chips is measured by a Karl Fisher's coulometric titrator (trace moisture measurement device AQ-2000; moisture evaporating device EV-200; made by the Hiranuma Sangyo Co., Ltd), wherein the moisture evaporating temperature is 180 °C under dry nitrogen atmosphere.

In the analysis of the concentration of amino groups, 1 g sample of the deodorizing nylon 6 chips is added into 40 ml of a solution with phenol and methanol, and then the solution is stirred until the sample is totally dissolved, and the concentration of amino groups of the deodorizing nylon 6 chips is detected by the acid-base titration method. The aforementioned acid-base titration method is titrated with aqueous hydrochloric acid (HCl), and bromothymol blue aqueous solution (BTB) is used as an indicator so as to detect the equivalent point of the sample, and the concentration of amino groups in the sample is calculated accordingly.

In the analysis of the ash content, 5 g sample of the deodorizing nylon 6 chips is added in to a crucible and then heated in a furnace at 800 °C for 2 hours. After heating for 2 hours, the crucible is cooled down in a dryer for 30 minutes, and a weight of the crucible is further measured so as to calculate the ash content of the sample indirectly. The formula which is for calculating the ash content is shown below:

$$\frac{(\text{weight of crucible after heating} - \text{weight of empty crucible})}{(\text{weight of empty crucible} + \text{weight of sample})} \times 100\ \%.$$

In detail, Example 3 (Em 3) and Comparative Example 3 (CEm 3) are used in the present experiment, wherein the deodorizing nylon 6 chips of the Example 3 is made by the preparation method of the deodorizing nylon 6 fiber of the present disclosure, and the nylon 6 chips used in Comparative Example 3 are commercially available product. The preparation method of conventional nylon 6 chips is a conventional technology and will not be described herein.

The detailed data of the property analysis of the nylon 6 chips of Example 3 and Comparative Example 3 are shown in Table 2. As shown in Table 2, the relative viscosity of Example 3 is 2.23 mPa·s, which only has a small difference compared to 2.45 mPa·s of Comparative Example 3. In the aspect of water content, when the water content of a particle is less than 500 ppm, it is favorable for improving the efficiency of spinning, wherein the water content of Example 3 is 440 ppm, and the water content of Comparative Example 3 is 480 ppm. Furthermore, the concentrations of amino groups of Example 3 and Comparative Example 3 are almost equal to each other, and the ash contents of Example 3 and Comparative Example 3 are also almost equal to each other. It shows that the physical properties of the deodorizing nylon 6 chips made by the preparation method of the deodorizing nylon 6 fiber of the present disclosure is similar with the physical properties of the conventional nylon 6 chips, and the deodorizing nylon 6 chips of the present disclosure can be further applied in the following spinning processes.

| Table 2 | | | | |
|---|---|---|---|---|
| | Relative viscosity (RV) | Water content (ppm) | Concentration of amino groups (meq/kg) | Ash content (%) |
| Em 3 | 2.45 | 440 | 66.22 | 0.9 |
| CEm 3 | 2.23 | 480 | 44 | 0 |

### 3. Property Analysis of Deodorizing Nylon 6 Fiber

The present experiment is for measuring a denier per filament, a strength, an extensibility and a boiling water shrinkage of the deodorizing nylon 6 fiber so as to analysis the fiber properties of the deodorizing nylon 6 fiber of the present disclosure.

In the physical property analysis, the denier per filament is measured according to ASTM D1907-2010, the strength is measured according to ASTM2256, the extensibility is measured according to ASTM2256, and the boiling water shrinkage is measured according to ASTM D2259-2002.

In detail, Example 4 (Em 4) and Comparative Example 4 (CEm 4) are used in the present experiment, wherein the deodorizing nylon 6 fiber of the Example 4 is made by the preparation method of the deodorizing nylon 6 fiber of the present disclosure, the nylon 6 fiber used in Comparative Example 4 is commercially available product, wherein the deodorizing nylon 6 fiber of the Example 4 further includes a powder of titanium dioxide, and a weight ratio of the powder of titanium dioxide is 0.9 based on the weight ratio of the deodorizing nylon 6 chips as 100 %, and the deodorizing nylon 6 fiber of the Example 4 is spun via the spinning apparatus 500 of Fig. 3. During the spinning process, the extruder 530 is divided into four regions, wherein a temperature T1 of the first region is 257 °C, a temperature T2 of the second region is 259 °C, a temperature T3 of the third region is 261 °C, and a temperature T4 of the four region is 263 °C. In the draw device 570, the rotational speed GR1 of the first godet roller assembly 571 is 3550 m/min, the rotational speed GR2 of the second godet roller assembly 572 is 4225 m/min, a temperature GRT2 of the second godet roller assembly is 145 °C so as to heat set the solidified fiber of the deodorizing nylon 6, and the rotational speed GR3 of the third godet roller assembly 573 is 4215 m/min. Furthermore, the draw ratio is calculated by the output speed and the input speed of the spinning process, wherein the output speed is the rotational speed GR3 of the third godet roller assembly 573, and the input speed is the rotational speed GR1 of the first godet roller assembly 571, so that the draw ratio (GR3/GR1) of the deodorizing nylon 6 fiber of the present disclosure is about 1.19, whereby a 50/34SD semi-dull deodorizing nylon 6 fiber is obtained.

The detailed data of the property analysis of the nylon 6 fiber of Example 4 and Comparative Example 4 are shown in Table 3, wherein the temperatures T1 to T4 of the extruder used in the Example 4 and Comparative Example 4, are the same, but the rotational speeds GR1 to GR3 of Comparative Example 4 are different from Example 4. As shown in Table 3, the denier per filament of the deodorizing nylon 6 fiber of the Example 4 is 50.7, which is similar to the denier per filament of 50.8 of the Comparative Example 4. That is, the degree of fiber compaction of the deodorizing nylon 6 fiber of the present disclosure is identical to the conventional nylon 6 fiber. In the aspect of the strength, the strength of the Example 4 is 3.96 g/d, and the strength of Comparative Example 4 is 5.6 g/d. Furthermore, in the aspects of the extensibility and the boiling water shrinkage, the extensibility of Example 4 is 43.4 %, the boiling water shrinkage of Example 4 is 6.8 %, the extensibility of Comparative Example 4 is 47.0 %, and the boiling water shrinkage of the Comparative Example 4 is 8.0 %. It shows that the deodorizing nylon 6 fiber made by the preparation method of the deodorizing nylon 6 fiber of the present disclosure can be further applied in other textile industrial application after treating with high temperature and spinning.

| Table 3 | | |
|---|---|---|
| | Em 4 | CEm 4 |
| Fiber Sepcification | 50/34 SD Semi-dull | 50/24 BR Full-dull |
| GR1 (m/min) | 3550 | 3600 |
| GR2(m/min) | 4225 | 4560 |
| GR3(m/min) | 4215 | 4550 |
| GRT2(°C) | 145 | 140 |
| Denier per filament | 50.7 | 50.8 |
| Draw ratio (%) | 1.19 | 1.26 |
| Srength (g/d) | 3.96 | 5.6 |
| Extensibility (%) | 43.4 | 47.0 |
| Boiling water shrinkage (%) | 6.8 | 8.0 |

**4. Deodorizing Ability Analysis Test of Deodorizing Nylon 6 Fiber**

The present experiment is for measuring the removed rate of the acetic acid and ammonia molecules so as to analysis the deodorizing ability of the deodorizing nylon 6 fiber of the present disclosure. The nylon 6 fibers of the aforementioned Example 4 and Comparative Example 4 are used in the present experiment. In detail, the nylon 6 fibers of the aforementioned Example 4 and Comparative Example 4 are woven into a garter, respectively, so as to process to the deodorizing ability analysis, wherein the removed rate of the acetic acid is measured according to FTTS-FA-018, and the removed rate of the ammonia molecules is also measured according to FTTS-FA-018.

The detailed data of the deodorizing ability analysis of the nylon 6 fiber of Example 4 and Comparative Example 4 are shown in Table 4. As shown in Table 4, the removed rate of acetic acid of Example 4 is 94 % compared to 82 % of the removed rate of acetic acid of Comparative Example 4, and the removed rate of ammonia molecules of Example 4 is 88 % compared to 44.3 % of the removed rate of acetic acid of Comparative Example 4. It shows that the deodorizing ability of the deodorizing nylon 6 fiber made by the preparation method of a deodorizing nylon 6 fiber of the present disclosure is excellent, and the deodorizing nylon 6 fiber of the present disclosure can not only enhance the deodorizing ability and deodorizing effects of the conventional nylon fiber, but also can expand the application of the deodorizing nylon 6 fiber.

| Table 4 | | |
|---|---|---|
| | Removed rate of acetic acid (%) | Removed rate of ammonia molecules (%) |
| Em 4 | 94 | 88 |
| CEm 4 | 82 | 44.3 |

According to the aforementioned embodiments, the present disclosure has the advantages described bellowing. First, the deodorizing ability of the nylon 6 fiber made by the preparation method of the deodorizing nylon 6 fiber of the present disclosure is achieved by adding the porous powder of citrate. Furthermore, the porous powder of citrate is uniformly dispersed in the size mixture of the deodorizing nylon 6 so as to maintain the deodorizing ability thereof in the following spinning processes, and the manufacturing efficiency of the deodorizing nylon 6 fiber can be further enhanced. Second, acetic acid and ammonia molecules can be removed effectively by the deodorizing nylon 6 fiber of the present disclosure, that is, the deodorizing nylon 6 fiber of the present disclosure has an excellent deodorizing ability. Furthermore, the physical properties such as the strength and the extensibility of the deodorizing nylon 6 fiber of the present disclosure are good, thus the application potential of the deodorizing nylon 6 fiber of the present disclosure is excellent.

## Claims

1. A preparation method (100) of a deodorizing nylon 6 fiber, comprising:

providing a fabricating step of deodorizing nylon 6 chips (200), comprising:

performing a mixing step (210), wherein a porous powder of citrate is mixed with a caprolactam powder so as to obtain a raw material of a deodorizing chip, a weight ratio of the porous powder of citrate ranges from 2 % to 6 % based on a weight ratio of the raw material of the deodorizing chip as 100 %, and a weight ratio of the caprolactam powder ranges from 94 % to 98 % based on the weight ratio of the raw material of the deodorizing chip as 100 %;
performing a nano-grinding step (220), wherein the raw material of the deodorizing chip is ground so as to obtain a size mixture of a deodorizing nylon 6, and an average diameter of the size mixture of the deodorizing nylon 6 ranges from 100 nm to 200 nm;
performing a granulated polymerizing step (230), wherein the size mixture of the deodorizing nylon 6 is polymerized so as to obtain the deodorizing nylon 6 chips;
performing a viscosity adjusting step (240), wherein a relative viscosity of the deodorizing nylon 6 chips is adjusted to a range from 2.20 mPa·s to 2.30 mPa·s, said relative viscosity of the deodorizing nylon 6 chips being measured by measuring, via an Ostwald viscosimeter at 25°C, a first flowing time (T1) which is a flowing time of a sample of deodorizing nylon 6 chips dissolved in 98 wt.% sulfuric acid wherein the ratio of the deodorizing nylon 6 chips to the sulfuric acid is 1 g : 100 ml, measuring a second flowing time (T2), which is a flowing time of the sulfuric acid without the sample, via the Ostwald viscosimeter at 25°C, and the relative viscosity of the deodorizing nylon 6 chips being the ratio of said first flowing time over said second flowing time; and
performing a water content adjusting step (250), wherein a water content ratio of the deodorizing nylon 6 chips is adjusted to a range from 350 ppm to 550 ppm; and

performing a spinning step (300), comprising:

providing a spinning material (310), wherein the spinning material comprises the deodorizing nylon 6 chips performed the viscosity adjusting step and the water content adjusting step; and
performing a melt fluxing step (320), wherein the spinning material is spun under a temperature ranging from 255 °C to 265 °C so as to obtain a deodorizing nylon 6 fiber.

**2.** The preparation method of claim 1, wherein the weight ratio of the porous powder of citrate is 5 % based on the weight ratio of the raw material of the deodorizing chip as 100 %, and the weight ratio of the caprolactam powder is 95 % based on the weight ratio of the raw material of the deodorizing chip as 100 %.

**3.** The preparation method of claim 1, wherein the spinning material further comprises a powder of titanium dioxide, and a weight ratio of the powder of titanium dioxide is greater than 0 and less than or equal to 7.5 based on the weight ratio of the deodorizing nylon 6 chips as 100 %.

**4.** The preparation method of claim 1, wherein the spinning material is melted in the melt fluxing step so as to obtain a spinning liquid, and the spinning step further comprises:
performing a fiber extracting step (330), wherein the fiber extracting step is for extracting the spinning liquid so as to obtain a nascent fiber of the deodorizing nylon 6, a difference between a relative viscosity of the nascent fiber of the deodorizing nylon 6 and the relative viscosity of the deodorizing nylon 6 chips performed the viscosity adjusting step is $\Delta$RV, and the following condition is satisfied:
$0 < \Delta RV < 0.1$.

**5.** The preparation method of claim 1, wherein the spinning step further comprises:
performing a cooling step (340), wherein the cooling step is performed under a temperature ranging from 18 °C to 22 °C and then the nascent fiber of the deodorizing nylon 6 is solidified so as to form a solidified fiber of the deodorizing nylon 6.

**6.** The preparation method of claim 5, wherein the spinning step further comprises:
performing a drawing step (350), wherein the solidified fiber of the deodorizing nylon 6 is drawn with a draw ratio ranging from 1.2 % to 1.5 %.

**7.** The preparation method of claim 6, wherein the drawing step further comprises:
performing a heating step (351), wherein the solidified fiber of the deodorizing nylon 6 is heat set under a temperature ranging from 145 °C to 200 °C.

**8.** The preparation method of claim 7, wherein the spinning step further comprises:
performing a winding step (360), wherein the solidified fiber of the deodorizing nylon 6 performed the heating step is wound in a speed ranging from 3200 m/min to 4800 m/min, and a physical property of the solidified fiber of the deodorizing nylon 6 is changed by the drawing step and the winding step, so that the solidified fiber of the deodorizing nylon 6 is transformed into the deodorizing nylon 6 fiber.

**9.** The preparation method of claim 8, wherein the physical property of the solidified fiber of the deodorizing nylon 6 changed is a strength or an elongation.

**10.** A deodorizing nylon 6 fiber made by the preparation method of claim 1, wherein a denier per filament of the deodorizing nylon 6 fiber ranges from 0.5 dpf to 6 dpf, and a strength of the deodorizing nylon 6 fiber ranges from 3.0 g/d to 6.8 g/d, said denier per filament of the deodorizing nylon 6 fiber being measured according to ASTM D1907-2010, and said strength of the deodorizing nylon 6 fiber being measured according to ASTM 2256.

**11.** The deodorizing nylon 6 fiber of claim 10, wherein an extensibility of the deodorizing nylon 6 fiber ranges from 40 % to 50 %, said extensibility of the deodorizing nylon 6 fiber being measured according to ASTM 2256.

**Patentansprüche**

**1.** Herstellungsverfahren (100) einer desodorierenden Nylon 6-Faser, umfassend:

Bereitstellen eines Herstellungsschritts von desodorierenden Nylon 6-Spänen (200), umfassend:

Durchführen eines Mischungsschritts (210), wobei ein poröses Citrat-Pulver mit einem Caprolactam-Pulver vermischt wird, um ein Rohmaterial eines desodorierenden Spans zu erhalten, wobei ein Gewichtsanteil des porösen Citrat-Pulvers bezogen auf einen Gewichtsanteil des Rohmaterials des desodorierenden Spans von 100 %, von 2 % bis 6 % reicht, und ein Gewichtsanteil des Caprolactam-Pulvers bezogen auf den Gewichtsanteil des Rohmaterials des desodorierenden Spans als 100 %, von 94 % bis 98 % reicht;

Durchführen eines Nano-Schleifschritts (220), wobei das Rohmaterial des desodorierenden Spans geschliffen wird, um ein Größengemisch eines desodorierenden Nylon 6 zu erhalten, und ein mittlerer Durchmesser des Größengemischs des desodorierenden Nylon 6 von 100 nm bis 200 nm reicht;

Durchführen eines granulierten Polymerisationsschritts (230), wobei das Größengemisch des desodorierenden Nylon 6 polymerisiert wird, um die desodorierenden Nylon 6-Späne zu erhalten;

Durchführen eines Viskositätsanpassungsschritts (240), wobei eine relative Viskosität der desodorierenden Nylon 6-Späne auf einen Bereich von 2,20 mPa•s bis 2,30 mPa•s angepasst wird, wobei die relative Viskosität der desodorierenden Nylon 6-Späne gemessen wird, indem mittels eines Ostwald-Viskosimeters bei 25°C eine erste Fließzeit (T1) gemessen wird, die eine Fließzeit einer Probe von in 98 Gew.% Schwefelsäure gelösten desodorierenden Nylon 6-Späne ist, wobei das Verhältnis der desodorierenden Nylon 6-Späne zur Schwefelsäure 1 g : 100 ml beträgt, eine zweite Fließzeit (T2) mittels des Ostwald-Viskosimeters bei 25°C gemessen wird, die eine Fließzeit der Schwefelsäure ohne die Probe ist, und die relative Viskosität der desodorierenden Nylon 6-Späne das Verhältnis der ersten Fließzeit zu der zweiten Fließzeit ist; und

Durchführen eines Wasseranteilanpassungsschritts (250), wobei ein Wasseranteil der desodorierenden Nylon 6 Späne auf einen Bereich von 350 ppm bis 550 ppm angepasst wird; und

Durchführen eines Spinnschritts (300), umfassend

Bereitstellen eines Spinnmaterials (310), wobei das Spinnmaterial die desodorierenden Nylon 6-Späne umfasst, die den Viskositätsanpassungsschritt und den Wasseranteilanpassungsschritt durchlaufen haben; und

Durchführen eines Schmelzflussschritts (320), wobei das Spinnmaterial bei einer Temperatur im Bereich von 255°C bis 265°C gesponnen wird, um eine desodorierende Nylon 6-Faser zu erhalten.

2. Herstellungsverfahren nach Anspruch 1, wobei der Gewichtsanteil des porösen Citrat-Pulvers bezogen auf den Gewichtsanteil des Rohmaterials des desodorierenden Spans von 100 %, 5 % ist, und der Gewichtsanteil des Caprolactam-Pulvers bezogen auf den Gewichtsanteil des Rohmaterials des desodorierenden Spans von 100 %, 95 % ist.

3. Herstellungsverfahren nach Anspruch 1, wobei das Spinnmaterial ferner ein Titanoxid-Pulver umfasst, und ein Gewichtsanteil des Titanoxid-Pulvers bezogen auf den Gewichtsanteil der desodorierenden Nylon 6-Späne von 100 %, größer als 0 und weniger als oder gleich 0,75 ist.

4. Herstellungsverfahren nach Anspruch 1, wobei das Spinnmaterial in dem Schmelzflussschritt geschmolzen wird, um eine Spinnflüssigkeit zu erhalten, und der Spinnschritt ferner umfasst:
Durchführen eines Faserextraktionsschritts (330), wobei der Faserextraktionsschritt zum Extrahieren der Spinnflüssigkeit ist, um eine entstehende Faser des desodorierenden Nylon 6 zu erhalten, eine Differenz zwischen einer relativen Viskosität der entstehenden Faser des desodorierenden Nylon 6 und der relativen Viskosität der desodorierenden Nylon 6-Späne, die den Viskositätsanpassungsschritt durchlaufen hat, $\Delta RV$ ist, und die folgende Bedingung erfüllt ist:
$0 < \Delta RV < 0,1$.

5. Herstellungsverfahren nach Anspruch 1, wobei der Spinnschritt ferner umfasst:
Durchführen eines Kühlschritts (340), wobei der Kühlschritt unter einer Temperatur im Bereich von 18°C bis 22°C durchgeführt wird und die entstehende Faser des desodorierenden Nylon 6 dabei verfestigt wird, um eine verfestigte Faser des desodorierenden Nylon 6 auszubilden.

6. Herstellungsverfahren nach Anspruch 5, wobei der Spinnschritt ferner umfasst:
Durchführen eines Ziehschritts (350), wobei die verfestigte Faser des desodorierenden Nylon 6 mit einem Ziehverhältnis im Bereich von 1,2 % und 1,5 % gezogen wird.

7. Herstellungsverfahren nach Anspruch 6, wobei der Ziehschritt ferner umfasst:
Durchführen eines Heizschritts (351), wobei die verfestigte Faser des desodorierenden Nylon 6 unter einer Temperatur im Bereich von 145°C bis 200°C erhitzt wird.

8. Herstellungsverfahren nach Anspruch 7, wobei der Spinnschritt ferner umfasst:
Durchführen eines Windungsschritts (360), wobei die verfestigte Faser des desodorierendes Nylon 6, die den Heizschritt durchlaufen hat, mit einer Geschwindigkeit im Bereich von 3200 m/min bis 4800 m/min gewunden wird, und eine physikalische Eigenschaft der verfestigten Faser des desodorierendem Nylon 6 durch den Ziehschritt und den Windungsschritt verändert wird, sodass die verfestigte Faser des desodorierendem Nylon 6 in die desodorierenden Nylon 6-Faser umgewandelt wird.

9. Herstellungsverfahren nach Anspruch 8, wobei die geänderte physikalische Eigenschaft der verfestigten Faser des desodorierenden Nylon 6 eine Festigkeit oder eine Dehnbarkeit ist.

10. Desodorierende Nylon 6-Faser, die durch das Herstellungsverfahren nach Anspruch 1 hergestellt ist, wobei ein Denier pro Filament der desodorierenden Nylon 6-Faser von 0,5 dpf bis 6 dpf reicht, und eine Festigkeit der desodorierenden Nylon 6-Faser von 3,0 g/d bis 6,8 g/d reicht, wobei der Denier pro Filament der desodorierenden Nylon 6-Faser gemäß ASTM D1907-2010 gemessen wird, und die Festigkeit der desodorierenden Nylon 6-Faser gemäß ASTM 2256 gemessen wird.

11. Desodorierenden Nylon 6-Faser nach Anspruch 10, wobei eine Dehnbarkeit der desodorierenden Nylon 6-Faser von 40 % bis 50 % reicht, wobei die Dehnbarkeit der desodorierenden Nylon 6-Faser gemäß ASTM 2256 gemessen wird.

**Revendications**

1. Procédé de préparation (100) d'une fibre de nylon 6 désodorisante comprenant :

   la préparation d'une étape de fabrication de copeaux de nylon 6 (200) comprenant :

      la réalisation d'une étape de mélange (210), au cours de laquelle une poudre poreuse de citrate est mélangée avec une poudre de caprolactame de manière à obtenir un matériau brut pour un copeau désodorisant, le ratio entre le poids de la poudre poreuse de citrate et celui du matériau brut du copeau désodorisant est compris entre 2 et 6% et le ratio entre le poids de la poudre de caprolactame et le poids du matériau brut du copeau désodorisant varie entre 94 et 98%,
      la réalisation d'une étape de nano-meulage (220), au cours de laquelle le matériau brut du copeau désodorisant est moulu de manière à obtenir un mélange de taille d'un nylon 6 désodorisant et un diamètre moyen du mélange de taille du nylon 6 désodorisant varie entre 100 et 200nm,
      la réalisation d'une étape de polymérisation granuleuse (230), au cours de laquelle le mélange de taille de nylon 6 désodorisant est polymérisé de manière à obtenir les copeaux de nylon 6 désodorisants,
      la réalisation d'une étape d'ajustement de la viscosité (240), au cours de laquelle une viscosité relative des copeaux de nylon 6 désodorisant est ajustée à une gamme comprise entre 2,20mPas.s et 2,30mPa.s, ladite viscosité relative des copeaux de nylon 6 désodorisant étant mesurée en mesurant, via un viscosimètre Ostwald à 25°C, un premier temps de circulation (T1) qui est un temps de circulation d'un échantillon de copeaux de nylon 6 désodorisant dissouts dans de l'acide sulfurique à 98% en poids, où le rapport des copeaux de nylon 6 désodorisant à l'acide sulfurique est de lg pour 100mL, la mesure d'un deuxième temps de circulation (T2) qui est un temps de circulation de l'acide sulfurique sans l'échantillon, via le viscosimètre à 25°C et la viscosité relative des copeaux de nylon 6 désodorisant étant le rapport entre le dit premier temps de circulation et le deuxième temps de circulation et
      la réalisation d'une étape d'ajustement du contenu en eau (250), au cours de laquelle le rapport de contenu en eau des copeaux de nylon 6 désodorisants est ajusté à une gamme comprise entre 350 et 550ppm et

   la réalisation d'une étape de rotation (300) comprenant :

      la fourniture d'un matériau de rotation (310), où le matériau de rotation comprend les copeaux de nylon 6 désodorisants réalisé à l'étape d'ajustement de la viscosité et à l'étape d'ajustement du contenu en eau et
      la réalisation d'une étape de plastification par bain (320) au cours de laquelle le matériau de rotation est mis en rotation à une température comprise entre 255 et 265°C de manière à obtenir une fibre de nylon 6 désodorisant.

2. Procédé de préparation selon la revendication 1, **caractérisé en ce que** le rapport entre le poids de la poudre poreuse de citrate et le poids du matériau brut du copeau désodorisant est de 5% et le rapport entre le poids de la poudre de caprolactame et le poids du matériau brut du copeau désodorisant est de 95%.

3. Procédé de préparation selon la revendication 1, **caractérisé en ce que** le matériau de rotation comprend en outre une poudre de dioxyde de titane et **en ce que** le rapport entre le poids de la poudre de dioxyde de titane et le poids des copeaux de nylon 6 désodorisants est supérieur à 0 et inférieur ou égal à 7,5.

4. Procédé de préparation selon la revendication 1, **caractérisé en ce que** le matériau de rotation est fondu à l'étape de plastification par bain de manière à obtenir un liquide de rotation et l'étape de rotation comprend en outre :
   la réalisation d'une étape d'extraction de la fibre (330), au cours de laquelle l'étape d'extraction de la fibre est destinée à extraire le liquide de rotation de manière à obtenir une fibre naissante de nylon 6 désodorisante, une différence entre une viscosité relative de la fibre naissante de nylon 6 désodorisante et la viscosité relative des copeaux de nylon 6 désodorisante réalisés à l'étape d'ajustement de la viscosité est ΔRV et la condition suivante est remplie :
   $0 < \Delta RV < 0{,}1$.

5. Procédé de préparation selon la revendication 1, **caractérisé en ce que** l'étape de rotation comprend en outre :
   la réalisation d'une étape de refroidissement (340), au cours de laquelle l'étape de refroidissement est réalisée à une température comprise entre 18 et 22°C et ensuite la fibre naissante de nylon 6 désodorisante est solidifiée de manière à former une fibre solidifiée de nylon 6 désodorisante.

6. Procédé de préparation selon la revendication 5, **caractérisé en ce que** l'étape de rotation comprend en outre :
   la réalisation d'une étape d'étirage (350), au cours de laquelle la fibre solidifiée de nylon 6 désodorisante est étirée selon un rapport d'étirage compris entre 1,2 et 1,5%.

7. Procédé de préparation selon la revendication 6, **caractérisé en ce que** l'étape d'étirage comprend en outre :
   la réalisation d'une étape de chauffage (351) au cours de laquelle la fibre solidifiée de nylon 6 désodorisante est thermofixée à une température comprise entre 145 et 200°C.

8. Procédé de préparation selon la revendication 7, **caractérisé en ce que** l'étape de rotation comprend en outre :
   la réalisation d'une étape d'enroulage (360) au cours de laquelle la fibre solidifiée de nylon 6 désodorisante ayant subi l'étape de chauffage est enroulée à une vitesse comprise entre 3200 et 4800m/min et une propriété physique de la fibre solidifiée de nylon 6 désodorisante est modifiée par l'étape d'étirage et l'étape d'enroulage, de manière à ce que la fibre solidifiée de nylon 6 désodorisante soit transformée en fibre de nylon 6 désodorisante.

9. Procédé de préparation selon la revendication 8, **caractérisé en ce que** la propriété physique de la fibre solidifiée de nylon 6 désodorisante modifiée est la résistance ou l'élongation.

10. Fibre de nylon 6 désodorisante fabriquée selon le procédé de préparation selon la revendication 1, **caractérisé en ce que** le denier par filament de la fibre de nylon 6 désodorisante varie entre 0,5dpf et 6dpf et **en ce que** la résistance de la fibre de nylon 6 désodorisante varie entre 3,0g/d et 6,8g/d, ledit denier par filament de la fibre de nylon 6 désodorisante étant mesuré selon la norme ASTM D1907-2010 et ladite résistance de la fibre de nylon 6 désodorisante étant mesurée selon la norme ASTM 2256.

11. Fibre de nylon 6 désodorisant selon la revendication 10, **caractérisée en ce que** l'extensibilité de la fibre de nylon 6 désodorisante varie entre 40 et 50%, ladite extensibilité de la fibre de nylon 6 désodorisante étant mesurée selon la norme ASTM 2256.

<u>100</u>

200

```
┌─────────────────────────────────────────────────┐
│   a fabricating step of deodorizing             │
│   nylon 6 chips is provided                     │
│                                                  │
│   ┌─────────────────────────────────┐           │
│   │   a mixing step is performed    │───── 210  │
│   └─────────────────────────────────┘           │
│                   ⇓                              │
│   ┌─────────────────────────────────┐           │
│   │ a nano-grinding step is performed│──── 220  │
│   └─────────────────────────────────┘           │
│                   ⇓                              │
│   ┌──────────────────────────────────────┐      │
│   │ a granulated polymerizing step is performed│─ 230 │
│   └──────────────────────────────────────┘      │
│                   ⇓                              │
│   ┌──────────────────────────────────────┐      │
│   │ a viscosity adjusting step is performed│──── 240 │
│   └──────────────────────────────────────┘      │
│                   ⇓                              │
│   ┌────────────────────────────────────────┐    │
│   │ a water content adjusting step is performed│─ 250 │
│   └────────────────────────────────────────┘    │
└─────────────────────────────────────────────────┘
                    ⇓
┌─────────────────────────────────────────────────┐
│   a spinning step is performed         300      │
│                                                  │
│   ┌─────────────────────────────────┐           │
│   │ a spinning material is provided │───── 310  │
│   └─────────────────────────────────┘           │
│                   ⇓                              │
│   ┌─────────────────────────────────┐           │
│   │ a melt fluxing step is performed│───── 320  │
│   └─────────────────────────────────┘           │
└─────────────────────────────────────────────────┘
```

Fig. 1

300

| a spinning material is provided | 310 |

⇩

| a melt fluxing step is performed | 320 |

⇩

| a fiber extracting step is performed | 330 |

⇩

| a cooling step is performed | 340 |

⇩

| a drawing step is performed | 350 |

⇩

| a heating step is performed | 351 |

⇩

| a winding step is performed | 360 |

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103774271 A
- JP 2012214919 A
- CN 104593897 A